# EUROPÄISCHE PATENTSCHRIFT

(11) **EP 0 524 950 B1**
(45) Veröffentlichungstag und Bekanntmachung des Hinweises auf die Patenterteilung: **07.09.1994**
(21) Anmeldenummer: 91905801.6
(22) Anmeldetag: 23.03.1991
(51) Int. Cl.: G01L 9/00, G01L 9/06

(54) **VERFAHREN ZUR HERSTELLUNG MIKROMECHANISCHER STRUKTUREN**
PROCESS FOR MANUFACTURING MECHANICAL MICRO-STRUCTURES
PROCEDE POUR LA FABRICATION DE STRUCTURES MICROMECANIQUES

(30) Priorität: 14.04.1990 DE 4012071
(43) Veröffentlichungstag der Anmeldung: 03.02.1993
(73) Patentinhaber: ROBERT BOSCH GMBH, 70442 Stuttgart (DE)
(72) Erfinder: TRAH, Hans-Peter, D-7410 Reutlingen (DE)
(86) Internationale Anmeldenummer: DE9100264
(87) Internationale Veröffentlichungsnummer: WO9116608

(56) Entgegenhaltungen:
- WO-A-86/06548
- US-A- 4 236 137

## Beschreibung

### Stand der Technik

Die Erfindung betrifft ein Verfahren zur Herstellung mikromechanischer Strukturen für Sensoren oder Aktoren in Halbleiterwafern nach der Gattung des Hauptanspruchs.

Zur Herstellung von mechanischen Strukturen in Halbleiterwafern sind bereits verschiedene Verfahren bekannt. Dabei unterscheidet man Bulkverfahren und Oberflächenverfahren. In der nicht vorveröffentlichten DE-AI- 40 00 496 wird beispielsweise ein Bulkverfahren beschrie ben, bei dem mit Hilfe der Fotomaskierungstechnik Ausnehmungen in die Oberflächen eines Halbleiterkörpers eingeätzt werden und durch Unterätzung von Stegen oder Rückseitenätzung Paddel freigelegt werden. Bei den Bulkverfahren wird der größte Teil eines Wafers durch einen isotropen Ätzprozeß entfernt, um die gewünschte mechanische Struktur zu erhalten. Das hat den Nachteil, daß der Wafer nach dem Ätzen bruchempfindliche Strukturen aufweist und dementsprechend behandelt werden muß. Außerdem können prozeßbedingte innere Spannungen in den Strukturen zu mechanischen Verformungen führen, die die Weiterprozessierung sehr erschweren.

Theresa A. Lober, Roger T. Howe, "Surface Micro-machining Process for Electrostatic Microactor Fabrication" (IEEE 1988) beschreiben ein Oberflächenverfahren, bei dem strukturierte Hilfsschichten auf die Oberfläche eines Siliziumwafers aufgebracht werden, die sockelartige Erhebungen auf der Oberfläche bilden. Über diesen sockelartigen Erhebungen wird Polysilizium abgeschieden, so daß die Polysiliziumschicht teilweise in direkter Verbindung mit der Oberfläche des Siliziumwafers steht. Durch anschließendes Entfernen der Hilfsschicht entstehen freischwingende Polysiliziumzungen auf der Oberfläche des Siliziumwafers. Bei diesem Verfahren können die eigentlich mechanisch belasteten Strukturen nicht aus einkristallinem Silizium gefertigt werden, was sich nachteilig auf deren zu erwartende Langzeitstabilität auswirkt.

Ferner ist aus Journal of Electrochemical Society, 1986, Extended Abstracts, Vol. 86 - 1, Masaru Shimbo, Kazuyoshi Furukawa, Kiyoshi Fukunda, "A Newly Developed Silicon to Silicon Direct Adhesion Method" ein Verfahren bekannt, mit dem man Silizumwafer gegeneinander bonden kann, ohne daß dazu eine Zwischenschicht erforderlich ist.

Aus der WO-AI-86-6548 ist eine Hohlraumbildung durch freiätzen einer lokalen Oxidation unter einer Polysiliziumschicht bekannt.

### Vorteile der Erfindung

Das erfindungsgemäße Verfahren mit den kennzeichnenden Merkmalen des Hauptanspruchs hat den Vorteil, daß die mikromechanischen Strukturen während des gesamten Herstellungsprozesses gegen mechanische Beanspruchung geschützt sind, da sie sich im Inneren einer Silizium-Sandwich-Struktur befinden und mit Siliziumoxid ausgefüllt sind. Dies macht die Gesamtstruktur sehr stabil und damit auch einfach prozessierbar. Vorteilhaft dabei ist auch, daß mögliche Spannungen nicht zu einer unerwünschten Verformung der Struktur während der Prozessierung führen, da die mechanische Verformbarkeit erst nach Entfernen des Oxids ganz zum Schluß erreicht wird. Von besonderem Vorteil ist, daß sich die Strukturen aus einkristallinem Silizium herstellen lassen, wodurch eine höhere Langzeitstabilität im Vergleich zu Polysiliziumstrukturen zu erwarten ist.

Durch die in den Unteransprüchen aufgeführten Maßnahmen sind vorteilhafte Weiterbildungen des im Hauptanspruch angegebenen Verfahrens möglich. So lassen sich durch die Herstellung von lokalen Oxidationen komplizierte Strukturen mit beispielsweise unsymmetrischen Tiefenabmessungen einfach realisieren. Vorteilhaft in diesem Zusammenhang ist auch, daß die lokalen Oxidationen sowohl von Vorder- als auch von der Rückseite des Wafers in den Wafer eingebracht werden können. Ein weiterer Vorteil des Verfahrens ist, daß sich Siliziumwafer einfach durch Siliziumfusionsbonden miteinander verbinden lassen. Bei der Verwendung von Wafern, die einen Dotierungsübergang aufweisen, läßt sich besonders vorteilhaft die Dicke der Gesamtstruktur reduzieren, da sich der Dotierungsübergang als Ätzstop verwenden läßt. Zum Freilegen der Struktur ist es besonders günstig, eine Öffnung in einen der Wafer zu ätzen, die auf das eingeschlossene Oxid trifft. Dieses läßt sich dann besonders vorteilhaft mit Flußsäure (HF) herauslösen. Ein besonderer Vorteil des erfindungsgemäßen Verfahrens besteht darin, daß die gesamte Prozessierung des Sensors oder Aktors sowie möglicherweise auch die IC-Fertigung vorgenommen werden kann, nachdem die mechanische Struktur durch die lokalen Oxidationen definiert ist, aber bevor die Struktur durch Herauslösen des Oxids freigelegt ist und damit ihre mechanische Verformbarkeit erreicht hat.

### Zeichnung

Ein Ausführungsbeispiel der Erfindung ist in der Zeichnung dargestellt und in der nachfolgenden Beschreibung näher erläutert.

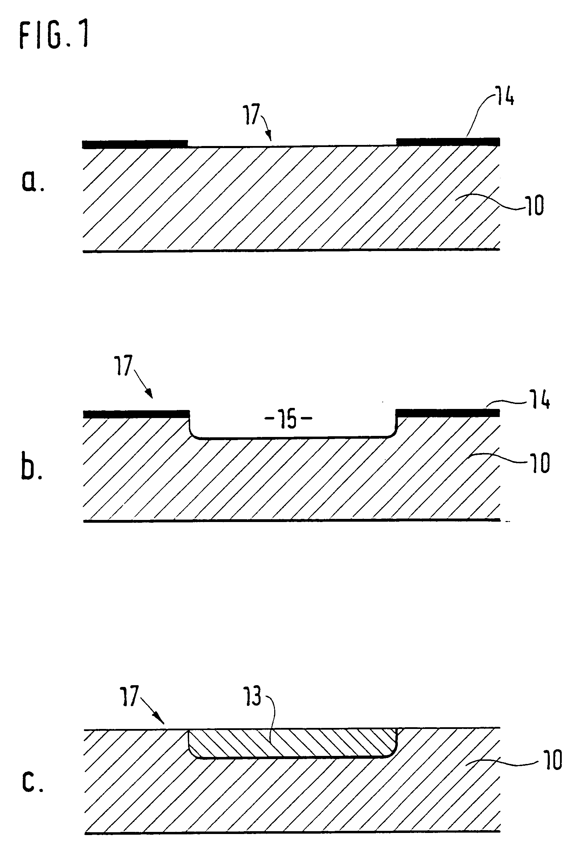

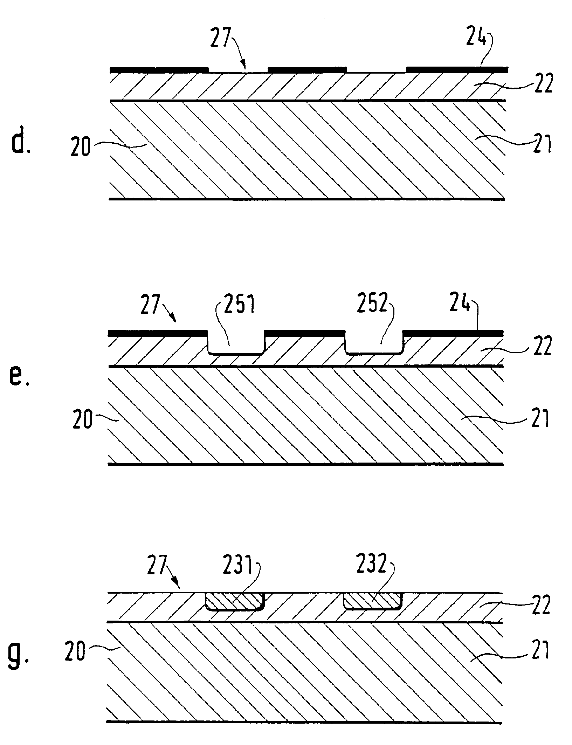

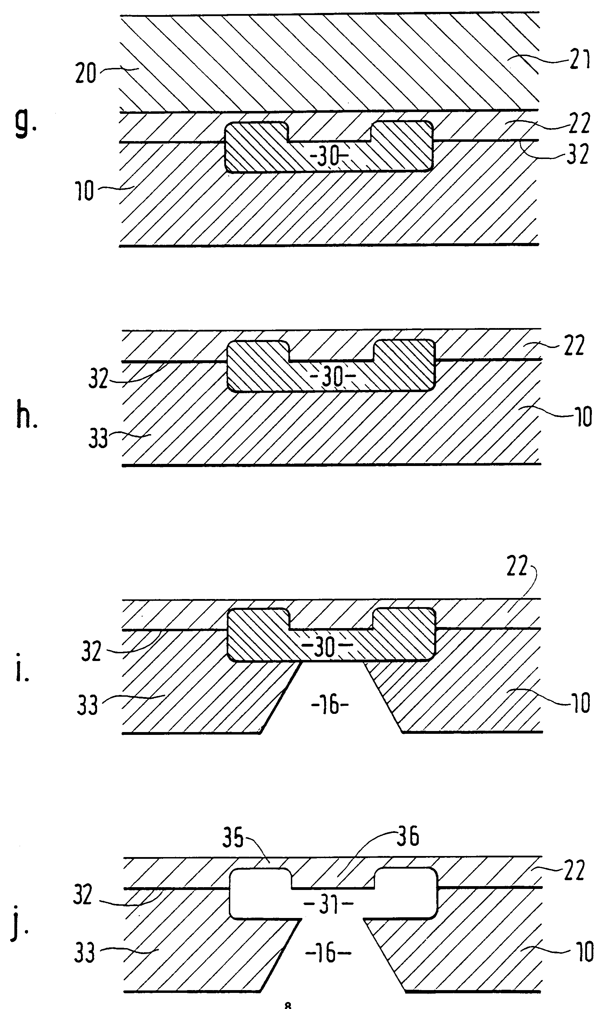

In den Figuren 1a bis j sind die am Aufbau der Sensorstruktur beteiligten Wafer in verschiedenen Stadien der Prozessierung dargestellt.

### Beschreibung der Erfindung

Erfindungsgemäß werden mindestens zwei Siliziumwafer zu einer Sandwich-Struktur verbunden, in der sich die eigentliche mechanische Struktur, allerdings mit Siliziumoxid ausgefüllt, befindet. Die mindestens zwei Siliziumwafer können eine beliebige Kristallorientierung aufweisen, undotiert sein oder auch mit einem Dotierungsprofil versehen sein. In dem hier beschriebenen Verfahren wird eine Struktur in zwei Siliziumwafern mit (100)-Kristallorientierung realisiert. Der erste Wafer 10 hat eine n-typ Dotierung; bei dem zweiten Wafer 20 handelt es sich um einen zweischichtigen Wafer, der aus einem p-typ Substrat 21 und einer darauf aufgebrachten n-typ Epitaxieschicht 22 besteht. Es erfolgt zunächst eine Prozessierung (LOCOS) der Einzelwafer, die parallel vorgenommen werden kann. Dazu werden die Oberflächen 17, 27 der Einzelwafer 10, 20 mit einer Passivierschicht 14, 24, vorzugsweise aus Si₃N₄, versehen. Durch die Strukturierung der Passivierschichten 14, 24 wird festgelegt, an welchen Stellen der Waferoberflächen 17, 27 lokale Oxidationen eingebracht werden sollen. Die Figuren 1a und d zeigen die Wafer 10 und 20 mit strukturierten Passivierschichten 14 und 24. In den nicht maskierten Bereichen der Oberflächen 17 und 27 der Wafer 10 und 20 werden Oxidationen aufgebracht, die auch in die Wafer 10 und 20 eindringen. Durch Herauslösen dieser Oxidationen entstehen Ausnehmungen 15, 251, 252 in den Oberflächen 17 und 27 der Wafer 10 und 20, wie in den Figuren 1b und e dargestellt. Diese Ausnehmungen 15, 251, 252 lassen sich je nach Bedarf durch mehrfaches Oxidieren und Herauslösen des Oxids vertiefen. Abschließend wird in die Ausnehmungen 15, 251, 252 Siliziumoxid 13, 231, 232 beispielsweise durch einen Diffusionsprozeß eingebracht, so daß möglichst plane Oberflächen 17, 27 der Wafer 10, 20 entstehen. Die Figuren 1c und f zeigen die Wafer 10 und 20 nach Einbringen des Siliziumoxids 13, 231, 232 in die Ausnehmungen 15, 251, 252 und nach Entfernen der Passivierschichten 14, 24. In einem nächsten Prozeßschritt werden die beiden Wafer 10 und 20 gegeneinander gebondet, und zwar so, daß die Epitaxieschicht 22 des Wafers 20 an den n-dotierten Wafer 10 grenzt. Ferner muß die Lage der lokalen Oxidationen 231 und 232 im Wafer 20 auf die Lage der lokalen Oxidation 13 im Wafer 10 abgestimmt werden. In Figur 1g ist die Sandwich-Struktur dargestellt, in der die aus den lokalen Oxidationen 13, 231 und 232 entstandene Siliziumoxidstruktur 30 eingeschlossen ist. Zur Verringerung der Dicke der Sandwich-Struktur kann man die spezielle Lage der Dotierungsschichten ausnutzen. So kann man in einem elektrochemischen Ätzschritt das gesamte p-Substrat 21 wegätzen, indem man den pn-Übergang zwischen Substrat 21 und Epitaxieschicht 22 als Ätzstop verwendet. Übrig bleibt ein n-dotierter Träger 33, in dem die Siliziumoxidstruktur 30 eingeschlossen ist, was in Figur 1h dargestellt ist. Der Grenzfläche 32 zwischen den ursprünglichen Wafern 10 und 20 kommt nach dem Silicon-Fusion-Bonden keinerlei Bedeutung mehr zu. Nach diesem Verfahrensschritt können die gesamte Prozessierung des Sensors oder Aktors sowie möglicherweise auch eine IC-Fertigung vorgenommen werden. Erst wenn diese Schritte beendet sind, wird durch elektrochemisches Ätzen ein Zugang in Form einer Öffnung 16 zum eingeschlossenen Siliziumoxid 30 freigelegt. Dies ist in Figur 1i dargestellt. Über die Öffnung 16 kann eine geeignete Lösung, wie zum Beispiel Flußsäure (HF), das Siliziumoxid der Struktur 30 angreifen und herauslösen. Dadurch entsteht an der Stelle der Siliziumdioxidstruktur 30 ein Hohlraum 31, wodurch die eigentliche in Figur 1j dargestellte Sensorstruktur freigelegt wird. Es handelt sich dabei um eine Membran mit einer seismischen Masse, die beispielsweise in einem Drucksensor Verwendung finden kann.

## Patentansprüche

1. Verfahren zur Herstellung mikromechanischer Strukturen für Sensoren oder Aktoren in mindestens zwei Halbleiterwafern (10, 20), insbesondere in mindestens zwei monokristallinen Siliziumwafern, bei dem mit Hilfe von Maskierungstechnik Ausnehmungen von jeweils mindestens einer Oberfläche (17, 27) der mindestens zwei Wafer ausgehend eingeätzt werden, dadurch gekennzeichnet, daß in die Oberflächen (17, 27) der mindestens zwei Wafer (10, 20) lokale Oxidationen (13, 231, 232) eingebracht werden, daß die mindestens zwei Wafer (10, 20) so miteinander verbunden werden, daß die lokalen Oxidationen (13, 231, 232) der mindestens-zwei Wafer (10, 20) in direktem Kontakt stehen, und daß die Struktur durch Herauslösen der lokalen Oxidationen (13, 231, 232) freigelegt wird.

2. Verfahren nach Anspruch 1, dadurch gekennzeichnet, daß zum Erzeugen der lokalen Oxidationen (13, 231, 232) eine Passivierschicht (14), vorzugsweise eine Si₃N₄-Schicht auf der Oberfläche (17, 27) abgeschieden und strukturiert wird, daß in den nicht passivierten Teil der Oberfläche (17, 27) Oxidationen eingebracht werden, so daß durch Herauslösen dieser Oxidationen Ausnehmungen (15, 251, 252) entstehen, daß in die Ausnehmungen (15, 251, 252) SiO₂ eingebracht wird, so daß eine plane Oberfläche (17, 27) entsteht, und daß anschließend die Passivierschicht (14) entfernt wird.

3. Verfahren nach Anspruch 1 oder 2, dadurch gekennzeichnet, daß zur Erzeugung der Ausnehmungen (15, 251, 252) mehrfach hintereinander Oxidationen eingebracht und herausgelöst werden.

4. Verfahren nach einem der vorhergehenden Ansprüche, dadurch gekennzeichnet, daß in beide Hauptoberflächen des Wafers (10 20) lokale Oxidationen eingebracht werden.

5. Verfahren nach einem der vorhergehenden Ansprüche, dadurch gekennzeichnet, daß die mindestens zwei Wafer (10, 20) mittels Siliziumfusionsbonden verbunden werden.

6. Verfahren nach einem der vorhergehenden Ansprüche, dadurch gekennzeichnet, daß die Dicke der miteinander verbundenen Wafer (10, 20) reduziert wird.

7. Verfahren nach einem der vorhergehenden Ansprüche, dadurch gekennzeichnet, daß die mindestens zwei Wafer (10, 20) dotiert sind, so daß an den beim Verbinden der Wafer (10, 20) entstehenden Grenzflächen (32) kein Dotierungsübergang auftritt und daß mindestens einer der Wafer (10, 20) eine untere Schicht (21) und eine obere Schicht (22) aufweist, zwischen denen ein Dotierungsübergang, vorzugsweise ein pn-Übergang besteht.

8. Verfahren nach Anspruch 7, dadurch gekennzeichnet, daß der Dotierungsübergang zwischen unterer Schicht (21) und oberer Schicht (22) als Ätzstop für die Reduzierung der Dicke der miteinander verbunden Wafer (10, 20) verwendet wird.

9. Verfahren nach einem der vorhergehenden Ansprüche, dadurch gekennzeichnet, daß bei innenliegender lokaler Oxidation (13, 231, 232) mindestens ein Zugang (16) in mindestens einen der Wafer (10, 20) geätzt wird.

10. Verfahren nach einem der vorhergehenden Ansprüche, dadurch gekennzeichnet, daß das Herauslösen der lokalen Oxidationen (13, 231, 232) mittels Flußsäure (HF) erfolgt.

11. Verfahren nach einem der vorhergehenden Ansprüche, dadurch gekennzeichnet, daß vor dem Herauslösen der lokalen Oxidationen (13, 231, 232) weitere Prozessierungsschritte zur Herstellung des Sensors oder Aktors durchgeführt werden.

## Claims

1. Method of producing micromechanical structures for sensors or actuators in at least two semiconductor wafers (10, 20), in particular in at least two mono-crystalline silicon wafers, in which method recesses are etched with the aid of masking technology starting from at least one surface (17, 27) in each case of the at least two wafers, characterized in that local oxidations (13, 231, 232) are introduced into the surfaces (17, 27) of the at least two wafers (10, 20), in that the at least two wafers (10, 20) are joined to one another in such a way that the local oxidations (13, 231, 232) of the at least two wafers (10, 20) are in direct contact, and in that the structure is exposed by dissolving out the local oxidations (13, 231, 232).

2. Method according to Claim 1, characterized in that, to produce the local oxidations (13, 231, 232), a passivating layer (14), preferably an Si₃N₄ layer, is deposited on the surface (17, 27) and patterned, in that oxidations are introduced into the unpassivated part of the surface (17, 27) so that recesses (15, 251, 252) are produced by dissolving out said oxidations, in that SiO₂ is introduced into the recesses (15, 251, 252) so that a plane surface (17, 27) is produced, and in that, finally, the passivating layer (14) is removed.

3. Method according to Claim 1 or 2, characterized in that, to produce the recesses (15, 251, 252) oxidations are repeatedly introduced and dissolved out one after the other.

4. Method according to one of the preceding claims, characterized in that local oxidations are introduced into the two principal surfaces of the wafer (10, 20).

5. Method according to one of the preceding claims, characterized in that the at least two wafers (10, 20) are joined by means of silicon fusion bonding.

6. Method according to one of the preceding claims, characterized in that the thickness of the mutually joined wafers (10, 20) is reduced.

7. Method according to one of the preceding claims, characterized in that the at least two wafers (10, 20) are doped so that no doping junction occurs at the interfaces (32) produced during the joining of the wafers (10, 20), and in that at least one of the wafers (10, 20) has a lower layer (21) and an upper layer (22) between which there is a doping junction, preferably a p-n junction.

8. Method according to Claim 7, characterized in that the doping junction between lower layer (21) and upper layer (22) is used as etch stop for the reduction of the thickness of the mutually joined wafers (10, 20).

9. Method according to one of the preceding claims, characterized in that, in the case of internal local oxidation (13, 231, 232), at least one access (16) is etched in at least one of the wafers (10, 20).

10. Method according to one of the preceding claims, characterized in that the local oxidations (13, 231, 232) are dissolved out by means of hydrofluoric acid (HF).

11. Method according to one of the preceding claims, characterized in that, before the local oxidations (13, 231, 232) are dissolved out, further processing steps are carried out to produce the sensor or actuator.

## Revendications

1. Procédé de fabrication de structure micromécanique pour des capteurs ou des actionneurs dans au moins deux plaquettes semi-conductrices (10, 20), notamment dans des plaquettes de silicium monocristallin, selon lequel on réalise par attaque chimique et à l'aide de la technique des masques, des cavités dans chaque fois au moins une surface supérieure (17,27) des plaquettes, procédé caractérisé en ce qu'on réalise des oxydations locales (13, 231, 232) dans la surface supérieure (17, 27) d'au moins deux plaquettes (10, 20), et on relie au moins les deux plaquettes (10, 20) l'une à l'autre pour que les oxydations (13, 231, 232) d'au moins deux plaquettes (10, 20) soient en contact direct et on dégage la structure par dissolution des oxydations locales (13, 231, 232).

2. Procédé selon la revendication 1, caractérisé en ce que pour créer des oxydations locales (13, 231, 232) on dépose une couche de passivation (14) de préférence une couche Si₃N₄ à la surface supérieure (17, 27) et on la structure et en ce que dans la partie non passivée de la surface supérieure (17, 27), on réalise des oxydations de manière que par dissolution de ces oxydations, on obtienne des cavités (15, 251, 252) et on introduit SiO₂ dans les cavités (15, 251, 252) pour obtenir une surface supérieure (17,27) puis on enlève la couche de passivation (14).

3. Procédé selon la revendication 1 ou 2, caractérisé en ce que pour créer des cavités (15, 251, 252) on réalise plusieurs oxydations successives et on les dissout.

4. Procédé selon l'une des revendications précédentes, caractérisé en ce qu'on réalise des oxydations locales dans les deux surfaces principales de la plaquette (10, 20).

5. Procédé selon l'une des revendications précédentes, caractérisé en ce qu'au moins les deux plaquettes (10, 20) sont reliées par des liaisons de fusion au silicium.

6. Procédé selon l'une des revendications précédentes, caractérisé en ce qu'on réduit l'épaisseur des plaquettes (10, 20) reliées.

7. Procédé selon l'une des revendications précédentes, caractérisé en ce qu'on dope au moins deux plaquettes (10, 20) pour qu'à la liaison des plaquettes (10, 20), il n'y ait pas d'excédent de dopage dans les surfaces limites (32) et en ce qu'au moins l'une des plaquettes (10, 20) comporte une couche inférieure (21) et une couche supérieure (22) entre lesquelles il y a une jonction de dopage de préférence une jonction pn.

8. Procédé selon la revendication 7, caractérisé en ce que la jonction dopée entre la couche inférieure (21) et la couche supérieure (22) est une barrière d'attaque chimique pour la réduction de l'épaisseur des plaquettes reliées (10, 20).

9. Procédé selon l'une des revendications précédentes, caractérisé en ce que pour des oxydations locales (13, 231, 232) situées à l'intérieur, on réalise par attaques chimiques au moins un accès (16) dans au moins l'une des plaquettes (10, 20).

10. Procédé selon l'une des revendications précédentes, caractérisé en ce qu'on dissout les oxydations locales (13, 231, 232) avec de l'acide fluorhydrique (HF).

11. Procédé selon l'une des revendications précédentes, caractérisé en ce qu'avant de dissoudre les oxydations locales (13, 231, 232), on exécute d'autres étapes de procédé pour fabriquer le capteur ou l'actionneur.
